# EUROPEAN PATENT APPLICATION

(11) **EP 2 813 992 A1**
(43) Date of publication of application: **17.12.2014**
(21) Application number: 14002060.3
(22) Date of filing: 13.06.2014
(51) Int. Cl.: G06Q 30/02

(54) **Method for automatic calculation of the vehicle's personalized insurance cost and its presentation on the display of the user device**

(30) Priority: 15.06.2013 EE 201300062
(71) Applicant: Silver Havamaa, 10149 Tallinn (EE)
(72) Inventor: Silver Havamaa, 10149 Tallinn (EE)
(74) Representative: Koitel, Raivo

(57) **Abstract**

The present invention provides a method for automatic calculation of the vehicle's personalised insurance cost and its presentation on the display of the user device, which allows the calculation of the accurate insurance costs for one and more vehicles without repetitive insertion of the personal and vehicle data (e.g. brand, model, engine's power, first registration date and cost). The method is devised to function in an electronic system, which is bound to one and more insurance companies' electronic database for placing inquiries and receiving responses. The electronic system may be accommodated with web based system for user access. According to method the electronic system is accommodated with the user authentication tools, allowing the inquiries to be made from one or more vehicle sales electronic system, involving the use of personal information bound to the user accounts and vehicles' data in the vehicles' databases. Responses to inquiries will be processed selectively to allow their presentation to user on the display of the user device according to the predefined conditions, while the responses may be selectively presented with or without the cost of one or more vehicles.

## Description

### Technical field

The present invention provides a method to be used for automatic calculation of the insurance cost of a vehicle and presentation of the results on the display of the user device, employing, for example, a web-based user interface.

### Prior art

Electronic databases (for example, www.salva.ee, www.if.ee) are known from prior art, providing the means for calculating insurance service costs per insurance company, using the parameters (for example, registration number or engine power and area of use) of a specific vehicle. Being bound to the calculation of value of services offered by a one insurance company can be highlighted as the main disadvantage of these solutions; also, making repetitive inquiries will be more time consuming for user as every inquiry needs to be entered into the electronic system afresh and when several inquiries are made, there is no option available to present the results simultaneously to user.

Electronic databases (for example www.iizi.net) are known from prior art, providing the means for calculating insured value of a vehicle, using the parameters (for example, brand, model, registration number or engine power) of a vehicle, employing rates available from more than one insurance company. Lack of automatic response from electronic system of insurance company, received as the result of an inquiry, based on detailed information, can be specified as a disadvantage of the solution. Also, similar inquiry has to be made repeatedly to calculate the personalised insurance costs for several vehicles, each time inserting the parameters of a vehicle, as minimum.

### Summary of the invention

The purpose of this invention is to provide a method for automatic calculation of the insurance cost of a vehicle and presentation of the results on the display of the user device, allowing the calculation and presentation of accurate insurance service costs for one or more vehicles without repeated insertion of personal data and parameters (e.g. brand, model, engine's power, first registration date and cost) of a vehicle.

Functioning of the method will take place within an electronic system, which is linked to an electronic database of one or more insurance companies to allow making inquiries and receiving responses within an electronic system. The electronic system can be supplied with a web-based interface to allow user access.

According to the method, the electronic system will be supplied with means for user authentication and to allow searches from a one or more electronic vehicle sale database, the electronic system presenting the costs of vehicle insurance costs, including either the price of the vehicle or, by choice, as a component of the total vehicle cost. In addition, settings can be predefined to present insurance costs and vehicle costs on the display of the user device simultaneously for more than one vehicle.

The method comprises the following steps:
- user information will be registered by an electronic system and used to create a personal user account, also linked to personal data of the user;
- user will gain access to electronic system after the authentication of user name;
- the system will make inquiries, employing the user device, to retrieve data from electronic databases of other companies, using the parameters of vehicle, predefined by the user, and user's personal data;
- user device will receive responses to inquiries, retrieved from electronic databases of other companies;
- one and more inquiries will be made to electronic databases of other companies;
- responses to different inquiries will be presented for the user of user device by means of an electronic system, involving simultaneous presentation of responses for a one or more vehicles, and as predefined, including the costs of a vehicle or vehicles, allowing the choice to be pre-set, where appropriate;
- the electronic system will be used for selective processing of responses to inquiries and to present the responses to inquiries, predefined by settings, to the display of a user device.

### Preferred embodiments of the invention

One of the preferred embodiments of the invention includes implementation of the method as a part of a web-based electronic system, involving automatic calculation and presentation of personalised insurance costs per one or more random vehicles.

Preferred embodiment will contribute to functioning of the method within a web-based electronic system, which will be linked to electronic databases of one or more insurance companies, used to make inquiries and receive responses. The electronic system will be equipped with means for identification of user information, including user authentication tools.

In addition, the electronic system will be linked to several electronic vehicle sale databases (and may be also linked to electronic information system of third party companies (for example, banks)).

The method comprises the following steps:
- personal data (e.g. personal ID code or name, gender, date of birth and address of a new user) will be recorded in the electronic system at new user's first attempt to access the web-based electronic system, resulting in a creation of a personal user account, which will be allocated a user name and will allow linking of personal data of the user by means of user device;
- entered user name will be controlled upon user's access to the web-based system by means of user device, preferably by user authentication;
- user will gain access to electronic system after the authentication of user name has given a positive result;
- the system will make inquiries, employing the user device, to retrieve data from electronic databases of other companies (e.g. electronic databases of insurance companies), using the parameters of vehicle, predefined by the user, and user's personal data;
- user device will receive accurately created responses to inquiries from electronic databases of other companies, including accurate information on costs, obtained on the bases of parameters of the specific vehicle and user information;
- one or more inquiries will be made to electronic databases of other companies, ind. insurance companies;
- responses to different inquiries will be presented for the user of user device by means of an electronic system, involving simultaneous presentation of responses for a one or more vehicles, and as predefined, including the costs of a vehicle or vehicles, allowing the choice to be pre-set, where appropriate;
- the electronic system will be used for selective processing of responses to inquiries (e.g. ranking by costs, either in ascending or descending order) and to present the responses to inquiries, predefined by settings, to the display of a user device (e.g. presentation, by default, the results as a comparative table, highlighting the lowest costs by a different colour, highlighting the highest costs by a different colour etc.).

The consecutive preferred embodiment will involve adjustment of the previous preferred embodiment to allow the electronic system to send the same inquiry, repeatedly, to electronic system of one or more insurance companies to check the costs, received as a response, at different times without having to enter the parameters of the same vehicles repeatedly for the inquiry.

Another consecutive preferred embodiment will involve presentation the data to the user on the user device, differentiating the visual image and including additional information about the insurance services, provided by the system; the system will take the personal user account information into consideration for presentation personalised additional information.

## Claims

1. Method for automatic calculation of the vehicle's personalised insurance cost and its presentation on the display of the user device, involving selective linking of the electronic system to other electronic systems and databases; user information will be registered by an electronic system and used to create a personal user account, also linked to user name and personal data of the user; electronic system will check the user name to authenticate the user before granting access to the system; electronic system will allow selective search for a suitable vehicle, including inquires from one or more electronic vehicle sale databases and involving presentation of the results to user, **characterised in that** the authentication of the user will be allowed by means of user device and the user will choose at least one vehicle from the database and the system will make inquiries, employing the user device, to retrieve data from electronic databases of other companies, using the parameters of vehicle, predefined by the user, and responses will be received to inquiries, retrieved from electronic databases of other companies, presented to the display of the user device by means of the electronic systems, whereas the responses to different inquiries will be presented for the user of user device by means of an electronic system, involving simultaneous presentation of responses for a one or more vehicles, and selectively together with the cost of one or more vehicles; the electronic system will be used for selective processing of responses to inquiries and to present the responses to inquiries, predefined by settings, to user by means of user device; one or more inquiries will be made to databases of other companies automatically.

2. Method according to claim 1, **characterised in that** the electronic system will rank the responses to enquiries, automatically, either according to cost or some other predefined characteristic.

3. Method according to claim 1 and claim 2, **characterised in that** the electronic system will rank the responses to enquiries, automatically, starting either from the lowest or the highest cost.

4. Method according to claims 1 to 3, **characterised in that** one or more data inquiries will be made to electronic systems of insurance companies and information about insurance costs of a specific vehicle will be received.

5. Method according to claims 1 to 4, **characterised in that** predefined settings of an electronic system will be used to make inquiries.

6. Method according to claims 1 to 5, **characterised in that** responses to different inquiries will be presented to the display of user device by means of an electronic systems, involving simultaneous presentation of responses for a one or more vehicles, and selectively together with the cost of a vehicle or vehicles, allowing the choice to be pre-set, where appropriate.

7. Method according to claims 1 to 6, **characterised in that** presentation of the data to the display of user device shall involve differentiation of the visual image and include additional information about the insurance services, provided by the system, whereas the system will take the personal user account information into consideration for presentation of personalised additional information.
